# EUROPÄISCHE PATENTSCHRIFT

(11) **EP 0 413 883 B1**
(45) Veröffentlichungstag und Bekanntmachung des Hinweises auf die Patenterteilung: **04.08.1993**
(21) Anmeldenummer: 90100063.8
(22) Anmeldetag: 03.01.1990
(51) Int. Cl.: F16L 3/18

(54) **Einlage für eine Rohrschelle**
Insert for a pipe clamp
Garniture interne pour collier de fixation de tuyauterie

(30) Priorität: 25.08.1989 DE 8910177 U
(43) Veröffentlichungstag der Anmeldung: 27.02.1991
(73) Patentinhaber: POPPE + CO. GIESSENER GUMMIWARENFABRIK GMBH & CO. KG, D-35392 Giessen (DE)
(72) Erfinder: Trautmann, Heinz, D-6149 Grasellenbach 3 (DE)
(74) Vertreter: Missling, Arne, Dipl.-Ing.

(56) Entgegenhaltungen:
- EP-A- 0 148 768
- FR-A- 2 640 349
- GB-A- 592 755
- US-A- 4 189 807
- US-A- 4 441 677

## Beschreibung

Die Erfindung bezieht sich auf eine Einlage für eine Rohrschelle, vorzugsweise aus einem Gummi, mit einer zentrischen, von zwei gegeneinander bewegbaren Schenkeln gebildeten Ausnehmung für die Einspannung eines Rohres, wobei die Einlage ferner von einem im wesentlichen U-förmigen Querschnitt gebildet ist, dessen Basisbereich dem Rohr zugewandt ist und dessen Seitenbereiche die Rohrschelle umgreifen, indem sie nach innen umgebogen sind, sowie auf eine Rohrschelle zur Verwendung der Einlage.

Derartige Einlagen sind vielfältig, beispielsweise aus den US-Patentschriften 4,189,807 und 4,441,677 sowie der GB-Patentschrift 592,755 bereits bekannt.

Bei derartiger Lagerung von Rohren hat es sich gezeigt, daß die üblicherweise verwendeten Strangpreßprofile, aus welchen die Einlagen geschnitten und in die Rohrschellen eingesetzt werden, nicht alle Anforderungen abdecken, da die verwendeten Materialien entweder keine ausreichende Geräuschdämmung ermöglichen oder bei zufriedenstellenden Dämmeigenschaften so weich sind, daß sie bei einer Relativbewegung zwischen dem Rohr und einer Rohrschelle von der Rohrschelle gezogen werden und abfallen. Da üblicherweise sowohl bei der Montage eines Rohres als auch während dessen Benutzung axiale Relativbewegungen zwischen der Rohrschelle und dem Rohr auftreten, beispielsweise durch von dem Bedienungspersonal hervorgerufene Verschiebungen des Rohres oder durch dessen thermische Ausdehnung, ist es wichtig sicherzustellen, daß die üblicherweise aus einem Gummi bestehende Einlage in korrektem Sitz an der Rohrschelle verbleibt. Dies hat man versucht, indem die aneinanderliegenden Flächen des Rohres und der Einlage so gestaltet sind, daß keine Haftreibung eintritt, beispielsweise dadurch, daß die beteiligte Oberfläche des Einsatzes von hoher Gleitfähigkeit ist, wie das die FR-Patentschrift 2 640 349 und insbesondere die Anordnung der EP-Anmeldung 0 148 768 A3 zeigen, wo die Oberfläche PTFE-überzogen ist.

Der Erfindung liegt die Aufgabe zugrunde, eine Einlage der eingangs genannten Art zu schaffen, welche bei einfachem Aufbau und einfacher Herstellbarkeit sowohl eine ausreichende mechanische Festigkeit als auch eine gute Geräuschdämmung aufweist und an der Rohrschelle ortsveränderlich ist, dabei aber die axiale Beweglichkeit des Rohres gegen die Rohrschelle weiterhin gewährleistet.

Erfindungsgemäß wird die Aufgabe dadurch gelöst, daß die dem Rohr zugewandte Seite der Einlage mit einer Oberflächenschicht versehen ist, die bessere Gleiteigenschaften aufweist als der Grundwerkstoff der Einlage daß die Seitenbereiche einschließlich deren nach innen umgebogenen Stücken härter sind als der Basisbereich.

Die erfindungsgemäße Einlage zeichnet sich durch eine Reihe erheblicher Vorteile aus.

Da die Einlage im Bereich ihrer Anbindung an die Rohrschelle relativ hart ausgeführt und damit verformungssteif ist, kann die Einlage von der Rohrschelle nicht abgezogen werden, wenn das Rohr in Längsrichtung relativ zu der Rohrschelle verschoben wird. Die Einlage verbleibt vielmehr in sicherer Weise an der Rohrschelle ortsfest und ist deshalb auch für solche Anwendungszwecke besonders gut geeignet, bei welchen das Rohr Schwingungen, insbesondere in seiner Längsrichtung, ausgesetzt ist.

Die dem Rohr zugewandte Seite der Einlage ist mit einer Oberflächenschicht mit guten Gleiteigenschaften versehen, die eine zu starke Reibung und damit eine übermäßige Verformung der Einlage bei einer Längsverschiebung des Rohres verhindert, so daß die Gefahr, daß die Einlage von der Rohrschelle abgezogen wird, erheblich verringert ist. Weiterhin werden Beschädigungen der Einlage vermieden, welche beispielsweise bei häufigen Längsverschiebungen des Rohres, z.B. infolge von Temperaturwechselbeanspruchungen, auftreten können.

Erfindungsgemäß ist der der Rohrschelle zugewandte Bereich der Einlage wesentlich weicher als die Seitenbereiche, so daß eine bessere Geräuschdämpfung erfolgt. Es ist somit möglich, jeweils eine optimale Materialauswahl zu treffen, einerseits hinsichtlich der Geräuschdämpfung und andererseits hinsichtlich der zur Verankerung der Einlage an der Rohrschelle erforderlichen Festigkeit.

Weiterhin ist die Einlage mit einem im wesentlichen U-förmigen Querschnitt versehen, dessen Basisbereich dem Rohr zugewandt ist und dessen Seitenbereiche zur Umgreifung der Rohrschelle nach innen umgebogen sind. Diese Form des Querschnitts gestattet zum einen eine sichere Verankerung der Einlage an der Rohrschelle, zum anderen ist es möglich, den Basisbereich den jeweiligen Anforderungen gemäß auszugestalten, ohne daß hierdurch die Gesamtfestigkeit und/oder Befestigbarkeit der Rohrschelle beeinträchtigt würde. So ist es beispielsweise insbesondere möglich, den Basisbereich mit Noppen oder Rippen zu versehen, um gezielte Anlageflächen zu dem Rohr zu schaffen. Diese können beispielsweise auch hinsichtlich der thermischen Isolierung vorteilhaft sein, da bei höheren Temperaturen des Rohres nicht die gesamte Fläche der Einlage mit dem Rohr in Berührung kommt. Beschädigungen der Einlage durch höhere Temperaturen können demnach vielfach vermieden werden.

Erfindungsgemäß ist es durch die Möglichkeit, verschiedene Materialien miteinander zu paaren auch möglich, die Noppen oder Rippen oder lediglich den Basisbereich mit einer Oberflächenschicht zu versehen, welche aus einem härteren Material als demjenigen des Grundwerkstoffes der Einlage gefertigt ist. Zusätzlich zu der Gleiteigenschaft der Oberflächenschicht kann somit der Verschleißwiderstand erhöht werden, es ist auch möglich, die guten Gleiteigenschaften mit der größeren Oberflächenhärte zu kombinieren oder alternativ vorzusehen.

In einer weiteren vorteilhaften Ausgestaltung der Erfindung weist die Einlage an ihrem Basisbereich über die Breite Zonen unterschiedlicher Dicke auf. Diese Zonen gestatten es, die Einlage beim Andrücken gegen das Rohr in unterschiedlicher Weise zu verformen, um auf diese Weise definierte Stütz- oder Haltekräfte aufbringen zu können.

Die erfindungsgemäße Einlage gestattet somit einen festen Sitz auf der Rohrschelle und verhindert ein Herausspringen bei axialen Bewegungen des Rohres. Weiterhin ermöglicht das weichere Material im Basisbereich der Einlage eine Schalldämmung gemäß DIN 4109, welche über lange Zeiträume gewährleistet sein kann, da keine mechanischen Beeinträchtigungen der Einlage zu befürchten sind.

Im folgenden wird die Erfindung anhand von Ausführungsbeispielen in Verbindung mit der Zeichnung beschrieben. Dabei zeigen
- Fig. 1 bis Fig. 8: verschiedene Querschnittsvarianten der erfindungsgemäßen Einlage,
- Fig. 9: eine Seitenansicht einer erfindungsgemäßen Rohrschelle mit eingesetzter Einlage und
- Fig. 10: eine Schnittansicht durch die in Fig. 9 dargestellte Rohrschelle.

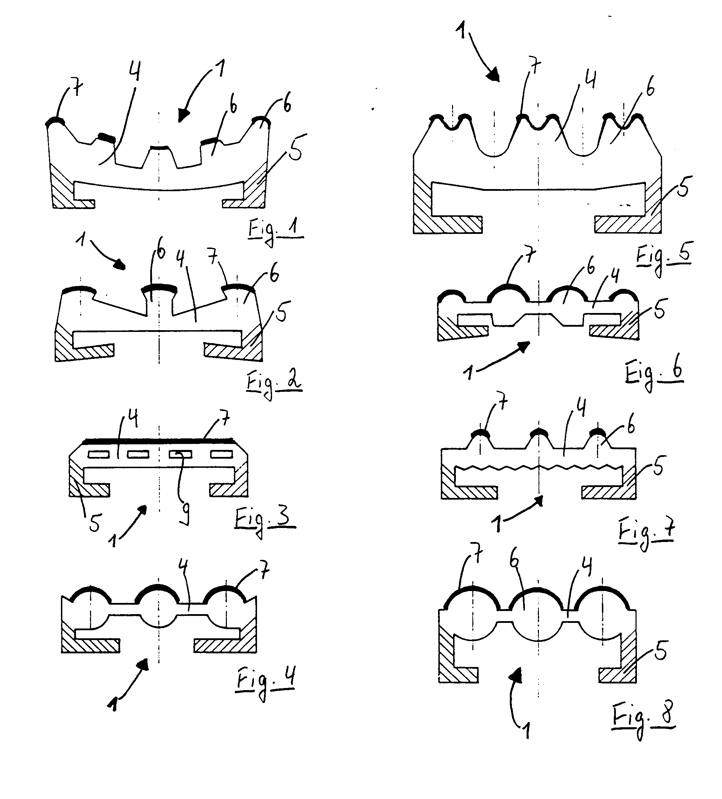

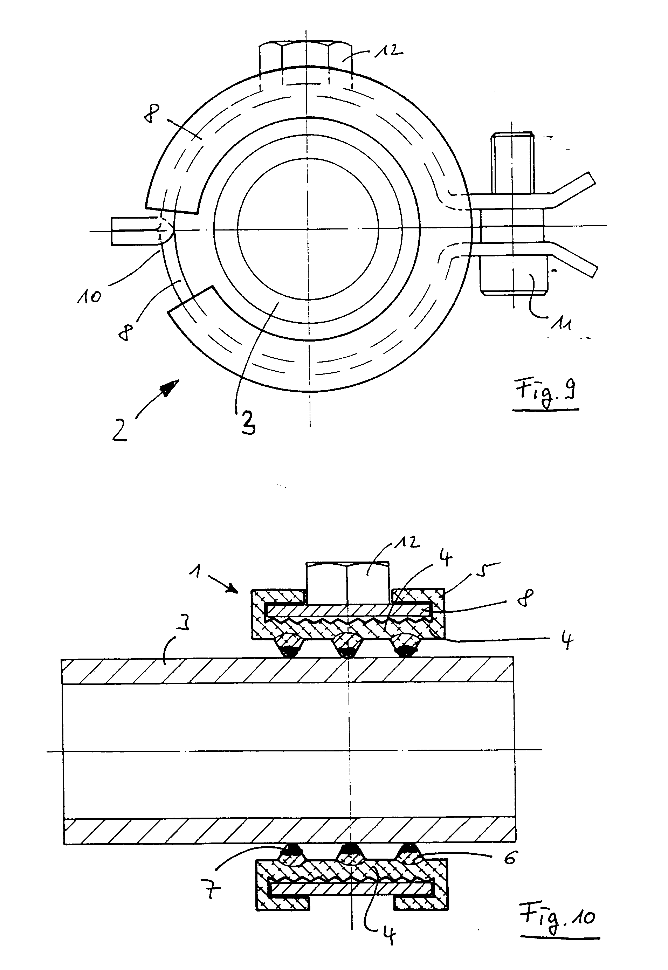

Die in den Fig. 1 bis 7 gezeigten Ausführungsbeispiele einer erfindungsgemäßen Einlage 1 weisen einen im wesentlichen U-förmigen Querschnitt auf, welcher aus einem Basisbereich 4 und Seitenbereichen 5 gebildet wird. Die freien Enden der Seitenbereiche 5 sind nach innen umgebogen, so daß es möglich ist, einen rechteckförmigen Querschnitt eines Schenkels 8 (siehe Fig. 10) einer Rohrschelle 2 zu umgreifen.

Bei den gezeigten Ausführungsbeispielen haben die Seitenbereiche 5 jeweils eine größere Härte als der Basisbereich 4, alle härteren Bereiche sind in den Fig. 1 bis 8 schraffiert dargestellt.

Die Ausführungsbeispiele weisen weiterhin an dem Basisbereich 4, d.h. an dem Bereich, welcher gegen ein Rohr 3 anlegbar ist, mehrere Noppen oder Rippen 6 auf, welche sich in gleichmäßiger Anordnung über die Länge der Einlage 1 erstrecken. Die Fig. 1, 2 und 4 bis 8 zeigen jeweils unterschiedliche Ausgestaltungsformen der Noppen oder Rippen 6. Das in Fig. 3 gezeigte Ausführungsbeispiel weist eine im wesentlichen glatte Oberfläche des Basisbereiches 4 auf, dieser ist jedoch mit Ausnehmungen 9 versehen, so daß auch bei diesem Ausführungsbeispiel der Basisbereich 4 über die Breite mit unterschiedlichen Dicken versehen ist.

Bei den gezeigten Ausführungsbeispielen ist an der Oberfläche des Basisbereichs jeweils eine Oberflächenschicht 7 vorgesehen, welche sich entweder nur an den Noppen oder Rippen erstreckt oder bei dem in Fig. 3 gezeigten Ausführungsbeispiel über die gesamte Fläche ausgebildet ist. Die Oberflächenschicht 7 kann beispielsweise aus einem Material mit günstigen Gleiteigenschaften bestehen, um den Reibungswiderstand zu dem Rohr 3 zu verringern. Es ist auch möglich, die Oberflächenschicht 7 aus einem Material größerer Härte, ähnlich dem Material der Seitenbereiche 5, auszugestalten, so daß der Verschleiß bei Relativbewegungen zwischen der Einlage 1 und dem Rohr 3 vermindert werden kann.

Die gezeigten Ausführungsbeispiele sind in ihrem Basisbereich 4 jeweils so ausgebildet, daß über die Breite des Basisbereichs 4 unterschiedliche Materialdicken vorliegen. Diese unterschiedlichen Materialdicken führen bei einem Anziehen der Rohrschelle 2 zu unterschiedlichen Klemmwirkungen, so daß eine gezielte Kraftaufbringung auf die Oberfläche des Rohres 3 möglich ist.

Die Fig. 9 und 10 zeigen jeweils eine Ansicht der erfindungsgemäßen Einlage 1 im eingebauten Zustand in Verbindung mit einer Rohrschelle 2. Die Rohrschelle 2 weist zwei Schenkel 8 auf, welche an einem Scharnierbereich 10 beweglich miteinander verankert sind. Die freien Enden der Schenkel 8 sind mittels einer Schraube 11 gegeneinander spannbar, um auf diese Weise die Einlage 1 gegen das Rohr 3 zu drücken. Die Einlage 1 kann entweder einstückig ausgebildet sein, es ist jedoch auch möglich, die Länge der Einlage 1 so zu bemessen, daß diese im wesentlichen dem inneren Umfangsbereich des jeweiligen Schenkels 8 entspricht.

Wie aus Fig. 10 ersichtlich ist, weisen die Schenkel 8 einen im wesentlichen rechteckförmigen Querschnitt auf, welcher von den Seitenbereichen 5 des U-förmigen Querschnitts der Einlage 1 umgriffen wird.

Der in den Fig. 9 und 10 gezeigte obere Schenkel 8 ist mit einer Mutter 12 verbunden, welche zur Aufhängung oder Montage der Rohrschelle 2 dienen kann.

Wie aus den Fig. 9 und 10 ersichtlich ist, welche das in Fig. 7 gezeigte Ausführungsbeispiel der Einlage im eingebauten Zustand darstellen, befinden sich lediglich die Oberflächenschichten 7 der Noppen oder Rippen 6 in Kontakt mit der Oberfläche des Rohres 3.

## Patentansprüche

1. Elastische Einlage für eine Rohrschelle (2), vorzugsweise aus einem Gummi, mit einer zentrischen, von zwei gegeneinander bewegbaren Schenkeln (8) gebildeten Ausnehmung für die Einspannung eines Rohres (3), wobei die Einlage (1) ferner von einem im wesentlichen U-förmigen Querschnitt gebildet ist, dessen Basisbereich (4) dem Rohr (3) zugewandt ist und dessen Seitenbereiche (5) die Rohrschelle (2) umgreifen, indem sie nach innen umgebogen sind, dadurch gekennzeichnet, daß die dem Rohr (3) zugewandte Seite der Einlage (1) mit einer Oberflächenschicht (7) versehen ist, die bessere Gleiteigenschaften aufweist als der Grundwerkstoff der Einlage (1), und daß, die Seitenbereiche (5) einschließlich deren nach innen umgebogenen Stücken härter sind als der Basisbereich (4).

2. Einlage nach Anspruch 1, dadurch gekennzeichnet, daß der Basisbereich (4) mit Noppen oder Rippen (6) versehen ist, welche gegen das Rohr (3) anlegbar sind.

3. Einlage nach Anspruch 2, dadurch gekennzeichnet, daß die Noppen oder Rippen (6) eine Oberflächenschicht (7) aus einem gegenüber dem Grundwerkstoff der Einlage (1) härteren und damit gleitfähigeren Material aufweisen.

4. Einlage nach Anspruch 1, dadurch gekennzeichnet, daß der Basisbereich (4) der Einlage (1) eine dem Rohr (3) zugewandte Oberflächenschicht aus einem härteren und damit gleitfähigeren Material aufweist.

5. Einlage nach einem der Ansprüche 1 bis 4, dadurch gekennzeichnet, daß die Einlage (1) an ihrem Basisbereich (4) über ihre Breite Zonen unterschiedlicher Dicke aufweist.

6. Rohrschelle mit einer zentrischen, von zwei gegeneinander bewegbaren Schenkeln (8) gebildeten Ausnehmung und zumindest einer an der einem Rohr (3) zugewandten Seite der Schenkel (8) an diesen verankerten elastischen Einlage (1), dadurch gekennzeichnet, daß die Einlage (1) gemäß einem der Ansprüche 1 bis 5 ausgebildet ist.

7. Rohrschelle nach Anspruch 6, dadurch gekennzeichnet, daß der die Einlage (1) halternde Haltebereich des Schenkels (8) einen im wesentlichen rechteckigen Querschnitt aufweist.

## Claims

1. A resilient insert for a pipe clamp (2), preferably made of rubber, comprising a central recess for clamping a pipe (3) and formed by two arms (8) which can be moved towards each other, wherein the insert (1) furthermore has a substantially U-shaped cross-section, the base region (4) of which faces the pipe (3) and the side regions (5) of which surround the pipe clamp (2) and are curved inwards, characterised in that the side of the insert (1) facing the pipe (3) is provided with a surface coating (7) which has better sliding properties than the basic material of the insert (1), and in that the side regions (5), including the inwardly curved parts thereof, are harder than the base region (4).

2. An insert according to claim 1, characterised in that the base region (4) is provided with protuberances or ribs (6) which can rest against the pipe (3).

3. An insert according to claim 2, characterised in that the protuberances or ribs (6) have a surface coating (7) of a material which is harder in relation to the basic material of the insert (1) and consequently has better sliding properties.

4. An insert according to claim 1, characterised in that the base region (4) of the insert (1) has a surface coating facing the pipe (3) and being of a harder material which consequently has better sliding properties.

5. An insert according to any one of claims 1 to 4, characterised in that the base region (4) of the insert (1) has zones of varying thickness over its breadth.

6. A pipe clamp having a central recess formed by two arms (8) which can be moved towards each other and having at least one resilient insert (1) on the side of the arms (8) facing a pipe (3) and anchored to the said arms, characterised in that the insert (1) is formed according to any one of claims 1 to 5.

7. A pipe clamp according to claim 6, characterised in that the holding region of the arm (8) holding the insert (1) is of substantially rectangular cross-section.

## Revendications

1. Garniture élastique pour un collier de fixation de tuyauterie (2), de préférence constituée en caoutchouc, comportant un évidement central pour le serrage d'un tube (3), évidement formé de deux éléments (8) pouvant se déplacer l'un par rapport à l'autre, la garniture intérieure (1) étant, de plus, réalisée avec une section essentiellement en forme de U, dont la zone formant base (4) est située du côté du tube et dont les zones latérales (5) enveloppent le collier (2) de fixation du tube en se recourbant vers l'intérieur, caractérisée en ce que la face de la garniture intérieure (1) située du côté du tube (3) est munie d'une couche de surface externe (7) présentant de meilleures caractéristiques de glissement que le matériau de base de la garniture intérieure (1), et en ce que les zones latérales (5), y compris leurs parties recourbées vers l'intérieur, sont plus dures que la zone de base (4).

2. Garniture intérieure suivant la revendication 1, caractérisée en ce que la zone formant base (4) est munie de nopes ou nervures (6) pouvant s'appliquer contre le tube (3).

3. Garniture suivant la revendication 2, caractérisée en ce que les nopes ou nervures (6) présentent une couche de surface externe (7) constituée d'un matériau plus dur que la matériau de base de la garniture intérieure (1) et donc susceptible de glisser.

4. Garniture intérieure suivant la revendication 1, caractérisée en ce que la zone formant base (4) de la garniture intérieure (1) présente une couche de surface externe située du côté du tube (3), constituée d'un matériau plus dur et donc susceptible de glisser.

5. Garniture intérieure suivant l'une quelconque des revendications 1 à 4, caractérisée en ce que la garniture intérieure (1) présente, sur sa zone formant base (4), sur sa largeur, des zones d'épaisseur différentes.

6. Collier de fixation de tuyauterie comportant un évidement central formé de deux éléments (8) pouvant se déplacer l'un par rapport à l'autre et au moins une garniture intérieure (1) élastique ancrée sur l'élément (8), du côté de cet élément tourné vers un tube (3), caractérisé en ce que la garniture intérieure (1) est réalisée suivant l'une des revendications 1 à 5.

7. Collier de fixation de tuyauterie suivant la revendication 6, caractérisé en ce que la zone de fixation de l'élément (8) qui maintient la garniture intérieure (1) présente une section essentiellement rectangulaire.
